(19) Europäisches Patentamt
European Patent Office
Office européen des brevets

(11) EP 1 818 651 A1

(12) **EUROPEAN PATENT APPLICATION**

(43) Date of publication:
**15.08.2007 Bulletin 2007/33**

(51) Int Cl.:
*G01D 5/14* (2006.01) *G01D 5/16* (2006.01)

(21) Application number: **06075323.3**

(22) Date of filing: **10.02.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(71) Applicant: **Rijksuniversiteit Groningen**<br>**9712 CP  Groningen (NL)** | (72) Inventor: **Van Netten, Sietse Marten**<br>**9315 TD Roderwolde (NL)**<br><br>(74) Representative: **Winckels, Johannes Hubertus F. et al**<br>**Vereenigde**<br>**Johan de Wittlaan 7**<br>**2517 JR  Den Haag (NL)** |

(54) **System and a method for determining one or more parameters of a source of a potential-energy field**

(57)     A sensor system for determining parameters of a source of a potential-energy field. The system has a sensor array for sensing a property of the potential-energy field generated by the source, with a first sensor at a first position and a second sensor at a second position. The first and second sensor each have a sensor output for outputting a sensor signal representing the sensed property. A signal processor can determine the sensed property as a function of the position of the at least one first sensor and the at least one second sensor. A correlator is connected to the signal processor and arranged to correlate the determined result to a predetermined result derived for a template source positioned at a predetermined position and/or orientation with respect to the sensor array. A calculator is connected to the correlator. The calculator can determine the parameter from the correlation result.

Fig. 1

**Description**

FIELD AND BACKGROUND OF THE INVENTION

The invention relates to a system and a method for determining one or more parameters of a source of a potential-energy field.

Systems for determining a parameter of a source, such as the distance or speed thereof, are known. For example, a passive sonar can receive acoustic waves emitted by a source and e.g. determine from the received acoustic waves the position and type of the source.

From Franosch et al., " Estimating position and velocity of a submerged moving object by the clawed frog Xenopus and by fish-A cybernetic approach ", Biol Cybern (2005) 93: 231-238, a method is known for localizing a submerged moving sphere. The method includes an arrangement with a number of lateral line organs. Each of the lateral line organs has a number of sensors, the cupulae. The cupulae measure the local water velocity. The measured water velocities of each cupula are combined. By determining a position of the zeros and extrema of the combined measured water velocities along the line of lateral line organs, the distance between the sphere and the arrangement and the velocity can be estimated.

However, a disadvantage of the prior art "Franosch " document is that the method can be used only if "a priori" knowledge is available on the existence of a single dipole source. Hence, the method cannot be used to for example determine the positions and dipole moments of an unknown number of multiple sources.

SUMMARY OF THE INVENTION

It is a goal of the invention to provide a system which allows to determine a larger variety of parameters and/or a larger variety of sources. Therefore, according to the invention, a system according to claim 1 is provided.

It has been found that a correlation of the observations of the sensors in the sensor array and a predetermined result derived for a (series of) template sources positioned at a predetermined position and/or a predetermined orientation with respect to said sensor array allows parameters, such as the position, to be estimated. It is further found that such a correlation also allows parameters of sources of a different type than a single dipole to be determined, such as monopoles, tripoles etc. and other sources, such as extended sources. Hence, such a system allows a larger variety of parameters of a larger variety of sources to be determined.

The invention further provides a use of such a sensor system according to claim 19 and a method according to claim 20. The invention also provides a computer program product according to claim 21.

These and other properties of the invention will be apparent from and elucidated with reference to the embodiments described hereinafter. Specific embodiments of the invention are set forth in the dependent claims.

BRIEF DESCRIPTION OF THE DRAWINGS

Further details, parameters and embodiments of the invention will be described, by way of example only, with reference to the drawings.

FIG. 1 schematically shows a block diagram of an example of an embodiment of a sensor system.
FIG. 2 schematically illustrates a first example of a method for determining parameters of a source.
FIG. 3 schematically illustrates a second example of a method for determining parameters of a source.
FIG. 4 shows graphs of simulations performed with methods determining parameters of a source.

DETAILED DESCRIPTION

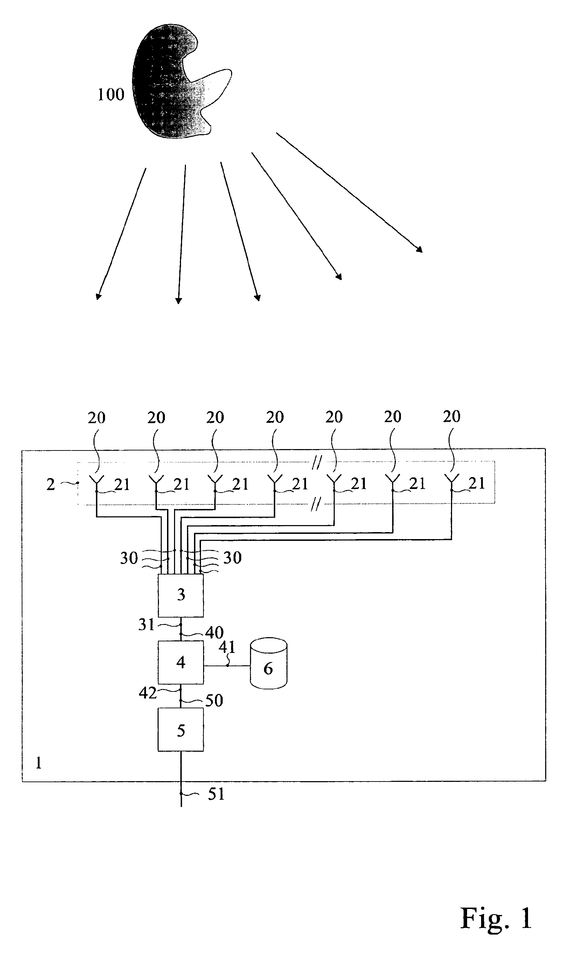

FIG. 1 schematically shows a block diagram of an example of an embodiment of a sensor system 1. The sensor system 1 includes an sensor array 2, a signal processor 3 , a correlator 4 and a calculator 5.

A source 100 is shown in the vicinity of the sensor array 2. The source 100 generates a potential-energy field. The potential-energy field may be any suitable type of field. The potential-energy field may, for example, be an electric, (electro)magnetic, acoustic, pressure or other type of field.

The source may be any suitable type of source and may, for example, be one or more of: a monopole, a dipole, being constant, changing or vibrating, and may for instance be of an (electro)magnetic, electric, acoustic, and/or hydrodynamic nature. Also, as explained below in more detail, the source may be part of any suitable type of object, such as for instance the human brain, a vehicle, a vessel or otherwise. Furthermore, the source may be an extended source, i.e. a source which has a certain size (contrary to a point source which for, practical purposes, has a negligible size). As explained below in more detail, it is found, that although an extended source may generate a potential- energy field different from the potential-energy field generated by a mono- or dipole, the multipole expansion of the potential-energy field of the extended source is usually dominated by the mono or dipole contribution at the location of the sensor array 2, which is located at a distance from the source. The distance between the source 100 and the array 2 may for example be of the order of, or smaller than, the dimensions of the sensor array 2.

The sensor array 2 can sense a property of the potential-energy field generated by the source. In order to sense the property, the sensor array 2 includes a number of sensors 20 at different positions. Each of the sensors 20 can sense a property of the potential-energy field, such as, for example, the strength of the potential-energy field, its spatial gradient at the location of the respective sensor 20 or any other suitable property. The sensors 20 may for example be transducers which convert the potential-energy field into a suitable type of signal of which the magnitude is a measure for the field strength or of other field property at the location of the respective sensor 20. The sensors 20 each have a sensor output 21 for outputting a sensor signal representing the sensed property. The sensors 20 may each be of a similar type and have comparable performance characteristics. Thereby, processing of the sensor signals is computationally simple. However, it is also possible that the sensors 20 have different performance characteristics, in which case e.g. the sensor array 2 may have been calibrated before operation to take the differences in performance into account.

The signal processor 3 has one or more, in this example a plurality of processor inputs 30 and a processor output 31. The processor inputs 30 are connected to the sensor outputs 21. Via the processor inputs 30, the signal processor 3 can receive the sensor signals outputted by the sensors 2. The signal processor 3 can compare the measurements, i.e. the sensor signals, performed by the sensors with each other. A comparison result may subsequently be outputted at the processor output 31. The processor 3 may for example determine the difference in the amplitude of the sensor signals and derive from this difference the variation or spatial gradient or the field strength as a function of the position along the sensor array . For instance, the signal processor 3 may be arranged to determine a component of the potential-energy field gradient oriented along the sensor array, such as a field pressure gradient, the amplitude (e.g. in case of a time-varying or oscillating field), the time derivatives or time integrals of these functions and/or the amplitudes thereof. However, the processor 3 may also compare the sensor signals in any other suitable manner.

The correlator 4 has a first correlator input 40, a second correlator input 41 and a correlator output 42. The first correlator input 40 is connected to the processor output 31. The second correlator input 41 is connected to a memory 6.

In the memory 6 data is stored. The data in the memory 6 represents predetermined results derived for a template source positioned at predetermined positions and/or orientations with respect to the sensor array. For example, actual measurements may have been performed with template sources having predetermined characteristics, e.g. strength, orientation and dimensions, and the result of these measurements may have been stored in the memory 6.

Alternatively, in the memory 6 simulated results may have been stored, for example based on a response of the sensor array 2 to a source with theoretical characteristics, such as an ideal monopole or dipole source. In the memory 6, a single predetermined result may be stored, for example in case the field generated by the template source is independent of the orientation of the template source relative to the sensor array 2. However, the memory 6 may also, for example, include data representing two or more parameter dependent predetermined results, for different orientations of the template source with respect to the sensor array 2.

The template source may be any suitable type of source and for example be a monopole or a dipole. It is found that a monopole or a dipole source generates a field which excites the sensors in the array in a manner which can be correlated to the excitation by the field of an arbitrary source, such that parameters of that source can be determined in a reliable manner. The predetermined result may for example represent a theoretical, parameter dependent, monopole or dipole template. It is found that such a template allows a reliable correlation with the measured result, after which parameters of the source such as distance, position and strenght can be determined with less computational efforts.

The correlator 4 can correlate the measured result to this predetermined result and output a correlation result at the correlator output 42. For example, the correlator 4 may retrieve the predetermined result from the memory 6 and shift and scale the predetermined result to fit the measured comparison result as close as possible.

For example, the correlator 4 may vary parameters of the predetermined result and/or the measured result to optimally match the predetermined result and/or the measured result. It is found that parameters of the source can be derived from the correlation of the predetermined result and the measured result, in a computationally simple manner. In particular, it is found that in case a theoretical idealised source is used as a template source that can be shifted relative to the sensor array and scaled, parameters of the actual source, such as the distance between the actual source 100 and the sensor array 2, or the position of the source 100 with respect to the array 2 can be derived by a distance-scaled correlation of the predetermined result with the measured result in an accurate manner. For instance, the correlator 4 may for example be arranged to effectively determine a convolution of the scaled template representing the predetermined result of an idealised monopole or dipole source and the measured result.

The parameters of the source 100 can be calculated by the calculator 5 based on the correlation result. The calculator 5 has a calculator input 50 and a calculator output 51. The calculator 5 can receive the correlation result outputted at the correlator output 42. The calculator 5 can calculate from the correlation result the respective parameter and output a result of this calculation, e.g. the calculated distance, position along the array, size or strength of the source, and direction or polarization of the source at the calculator output 51, as is explained below in more detail. The parameters determined by the calculator may include any suitable parameter of the source and for example include one or more of position, strenght, orientation, direction of motion thereof. The calculator 5 may for example be arranged to determine a position of a (local) maximum or minimum in a result of a correlation or convolution determined by the correlator 4. Also, the calculator 5 may determine a source magnitude, direction or strength from the determined position.

The correlator 4 may be arranged to reconstruct an image of the potential-energy field. It is found that a source of a potential-energy field may be imaged accurately via a mathematical reconstruction operation. It is further found that such a reconstruction can be accurately determined using a parameter-dependent template $\psi$ to represent the predetermined result of the template source. Thus, the template $\psi$ may represent a predetermined template of the field components along the sensor array produced by a source directed parallel or perpendicular to the sensor array.

It is found that a very large category of fields of extended sources can be adequately expressed with so called multipole expansions, that is by approximating the field of the extended source as a field generated by monopole, dipole, tripole etc. sources positioned close to the extended source. Hence, by correlating the measured result with such a predetermined result, an accurate parameter estimation with less computational effort can be obtained. In particular approximating the field of the extended source as a field generated by a series of a monopole, and/or a dipole, and/or a tripole etc. positioned at the same location requires less computational effort while obtaining an accurate estimate of the position and other parameters of the source.

It is found that the potential of an extended source at a certain distance can be accurately characterized by a very limited number of lower order poles. More in particular, it is found that, without wishing to be bound to any theory, for most practical circumstances, an expansion into a single pole such as either a monopole or dipole approximation gives accurate results. Hence, by correlating the observations of the sensors array 2 with an observation template determined for a, theoretical and ideal, monopole or dipole source at a predetermined position and, optionally, a predetermined orientation of the dipole, the parameters of the source, such as position, orientation and strength can be estimated accurately. Moreover, it is found that a particular accurate result can be obtained for a source which generates a potential-energy field of which the field strength is inversely proportional to the distance from the source.

For example, it is found that for electrical fields arising from polarized neutral charge distributions, i.e. a source, that is overall neutral (total charge Q = 0), a dipole approximation can be used to accurately estimate the position, and orientation or polarization of the source, especially for distances typically larger than the dimensions of the source. A dipole approximation has also be found to allow an accurate estimation of parameters of sources of acoustic and hydrodynamic fields, which are produced in media (gas, liquid, or any other visco-elastic medium) by an oscillating object that is free to move the medium at both sides of its oscillating trajectory.

A suitable type of observation template for sources which can be approximated as a monopole is found to be a template which can be described as :

$$\psi_{\text{mon}}(s,b,d) = \frac{\frac{s-b}{d}}{\left(1+\frac{s-b}{d}^2\right)^{\frac{3}{2}}} \tag{1}$$

Here, and in the following, s denotes the measuring position along the sensor array, $b$ is the position of the template source along the sensor array, and $d$ the (shortest) distance of the template source to the sensor array. It is noted that this mathematical equation is an odd function of $(s-b)/d$, and scales the function along the measuring position s linearly with distance parameter $d$. Without whishing to be bound to any theory, it is believed that an observation template determined according to this mathematical formula (1) can be used to accurately correlate with potential-field gradients measured by the sensor array for most sources of which the potential-field strength is essentially inversely proportional to the distance between the source and the sensor. More in particular, it is found that such an observation template can be correlated with the measured field gradient along the sensor array to determine properties of the source, such as the position relative to the sensor array.

Suitable types of observation templates to be used for correlation with potential-energy field gradients measured by the sensor array in the case of sources, which can be approximated as a dipole, for an orientation of the dipole direction parallel to the sensor array are found to be described mathematically as:

$$\Psi_{dip,e}(s,b,d) = \frac{1 - 2(\frac{s-b}{d})^2}{\left[1 + (\frac{s-b}{d})^2\right]^{\frac{5}{2}}}, \qquad (2)$$

It is noted that this mathematical equation is an even function of (s-b)/d, and scales the function along the measuring position s linearly with distance parameter d. Without whishing to be bound to any theory it is believed that an even template function can be used to accurately represent a dipole with it's dipole direction parallel to the sensor array.

Suitable types of observation templates to be used for correlation with potential-energy field gradients measured by the sensor array in the case of sources which can be approximated as a dipole for an orientation of the dipole direction perpendicular to the sensor array are found to be described mathematically as:

$$\Psi_{dip,o}(s,b,d) = \frac{-3(\frac{s-b}{d})}{\left[1 + (\frac{s-b}{d})^2\right]^{\frac{5}{2}}} \qquad (3)$$

It is noted that this mathematical equation is an odd function of (s-b)/d, and scales the function along the measuring position s linearly with distance parameter d. Without whishing to be bound to any theory it is believed that an odd template function can be used to accurately represent a dipole with it's dipole direction perpendicular to the sensor array.

Without whishing to be bound to any theory, it is believed that a template determined according to these mathematical formulas (2) and (3) or a combination thereof can be used to accurately correlate most sources of potential-energy fields for which the potential strength is essentially inversely proportional to the square of the distance between the source and the sensor. As mentioned above, the correlator 4 may be arranged to determine a reconstruction of the potential-energy field, using the template and the measured result, by performing a reconstruction operation in accordance with a predefined mathematical relationship, from hereon referred to as the reconstruction function.

The reconstruction function may include a correlation or a convolution-like operation $F$ of a measured excitation pattern, $f(s)$, along the sensor array 2 (with $s$ representing the position along the array), with the mono- or dipole templates, $\psi$, at every scale $d$, while, optionally, normalizing with the square root of the distance (i.e. $F(b,d)$ are proportional to $1/\sqrt{d}$). The reconstruction may for example be an operation according to the mathematical algorithm functions that can be expressed as:

$$F(b,d) = \frac{1}{\sqrt{d}} \int_{s_1}^{s_2} f(s) \cdot \psi(s,b,d)\,ds, \qquad (4)$$

or equivalently In this eq. 4, $s$ represents the position of the respective sensor 20 along the sensor array 1, which position extends from a first point $s_1$ to a second point $s_2$, $f(s)$ represents the excitation of the sensor at position $s$. The template $\psi$, may for example be a series of predetermined observation templates observed as a function of the position $s$ along the sensor array, produced by a source at different distances $d$ from the sensor array 1, and located at different positions $b$ relative along the array. The template $\psi$ may alternatively be an odd or even wavelet and e.g. be as in equations (1), (2) or (3). Then it represents a template $\psi_{i,j}((s-b)/d)$ for a monopole resp. dipole source and the operation in eq. 4 consequently describes associated reconstruction functions $F_{i,j}(b,d)$. with i = mon(opole) or dip(ole), and j = e(ven) or o (dd) for i =dip.

It is found that when the reconstruction function $F_{mon}(b,d)$ is used, the coordinates of a monopole source can be determined in a computationally simple manner by determining the values of the parameters $b$ and $d$ which give the maximum of the reconstruction function $F_{mon}(b,d)$. It is found that the value of the parameter $b$ corresponds to the position of the source relative to the sensor array 2, whereas the value of the parameter $d$ is found to correspond to the (shortest) distance between the source 100 and the sensor array 2. Hence, the calculator 5 can determine the position of the source or sources from the reconstruction function values outputted by the correlator 4 by simply finding the (local) maxima therein and determining the $b$ and $d$ values ($b_{max}, d_{max}$) associated with the found (local) maxima.

In addition to the position of the monopole source, the magnitude of the source (e.g. the strength of the monopole moment) may also be determined using the reconstruction function. In this respect, it should be noted that the magnitude of the source is believed to be a measure of the size of the source, and more in particular the stronger the source the larger its size. Hence, by determining the magnitude of the source, an indication of the source dimensions can also be obtained. The magnitude ($Q$) of a source approximated by a monopole with potential energy $Q/r$, where $r$ is the distance to the source, can be estimated from the reconstruction function and the estimated positions ($b_{max}, d_{max}$), for example using the following mathematical relationship or an equivalent thereof :

$$Q = \frac{d_{max}^{\frac{3}{2}}}{c_0} F_{mon}(b_{max}, d_{max}) \,, \qquad (5)$$

with:

$$c_0 = \frac{\pi}{8} \,. \qquad (6)$$

In the case of sources which exhibit dipole behaviour, the potential-energy field can be approximated by $p \cdot r /$ ($r^3$), where $p$ is the dipole moment vector and $r$ the distance vector pointing to the observation point and having a length $r$, equal to the distance to the source. When the dipole moment vector is oriented parallel ($\phi = 0°$) or at a right angles ($\phi = 90°$) to the array the local maxima ($b_{max}, d_{max}$) of the reconstruction functions $F_{dip,e}$ or $F_{dip,o}$ can be used respectively to estimate the positions of the dipole sources. The magnitude, $|p|$, of dipole moment vectors aligned parallel to the array can be estimated from the reconstruction function, for example using the following mathematical relationship or an equivalent thereof:

$$|p| = \frac{d_{max}^{\frac{5}{2}}}{c_{even}} F_{dip,e}(b_{max}, d_{max}) \,, \qquad (7)$$

with,

$$c_{even} = \frac{27}{128} \pi \,. \qquad (8)$$

If the dipole moment vector is oriented at right angles with respect to the sensor array, an estimate of the magnitude of the dipole moment vector can be estimated from the reconstruction function, for example using the following mathematical relationship or an equivalent thereof:

$$|p| = \frac{d_{max}^{\frac{5}{2}}}{c_{odd}} F_{dip,o}(b_{max}, d_{max}) \,. \qquad (9)$$

with,

$$c_{\text{odd}} = \frac{45}{128}\pi \tag{10}$$

When the directions of dipole moment vectors, $\boldsymbol{p}$, are not known a priori, a combination of $F_{\text{di,e}}$ and $F_{\text{di,o}}$ can be used. Then, the position of dipoles can be estimated via the positions $(b_{\text{max}}, d_{\text{max}})$ of the local maxima of a combined reconstruction function, $F_{\text{com}}$, which may be determined by an operation according to the mathematical formula:

$$F_{\text{com}}(b,d) = \sqrt{c_1 F_{\text{dip,e}}^2(b,d) + F_{\text{dip,o}}^2(b,d)} \tag{11}$$

In equation 11, the scaling coefficient $c_1$ may be set to:

$$c_1 = \frac{c_{\text{odd}}}{c_{\text{even}}} = \frac{5}{3}. \tag{12}$$

The direction $\phi$, of the dipole sources, i.e. the angle of the dipole moment vector with respect to the array, 2, can be estimated from the positions $(b_{\text{max}}, d_{\text{max}})$ found via the maxima of $F_{\text{com}}$ (see equation 11) by substitution in:

$$\phi = -\arctan\left(\frac{F_{\text{dip,o}}(b_{\text{max}}, d_{\text{max}})}{c_1 F_{\text{dip,e}}(b_{\text{max}}, d_{\text{max}})}\right) \tag{13}$$

When the angles, $\phi$, and the positions $(b_{\text{max}}, d_{\text{max}})$ have been determined (for example by using equations 11 and 13), the magnitudes of the dipole moment vectors can be estimated using:

$$|\boldsymbol{p}| = \frac{d_{\text{max}}^{\frac{5}{2}}}{c_2} F_{\text{com}}(b_{\text{max}}, d_{\text{max}}) \tag{14}$$

with:

$$c_2 = c_{\text{even}}\left[c_1(\cos^2\phi + c_1\sin^2\phi)\right]^{\frac{1}{2}} \tag{15}$$

In the example above, a line-shaped sensor array 2 has been used and the position of the source 100 has been determined in two dimensions, i.e. the source is located somewhere on a circle with radius $d$ around the source array 2 with its centre at position $b$ of the source array 2. However, the sensor system 1 may also determine the position in three dimensions. For example, the sensor array 2 may include two linear arrays, which are suitably oriented at different angles with respect to each other and which define a plane which does not include the source(s). For each array the position in two dimensions may be obtained as described above and the 2-dimensional positions can be combined as to obtain estimates of source positions, strengths and in the case of dipoles, also directions, in three dimensions.

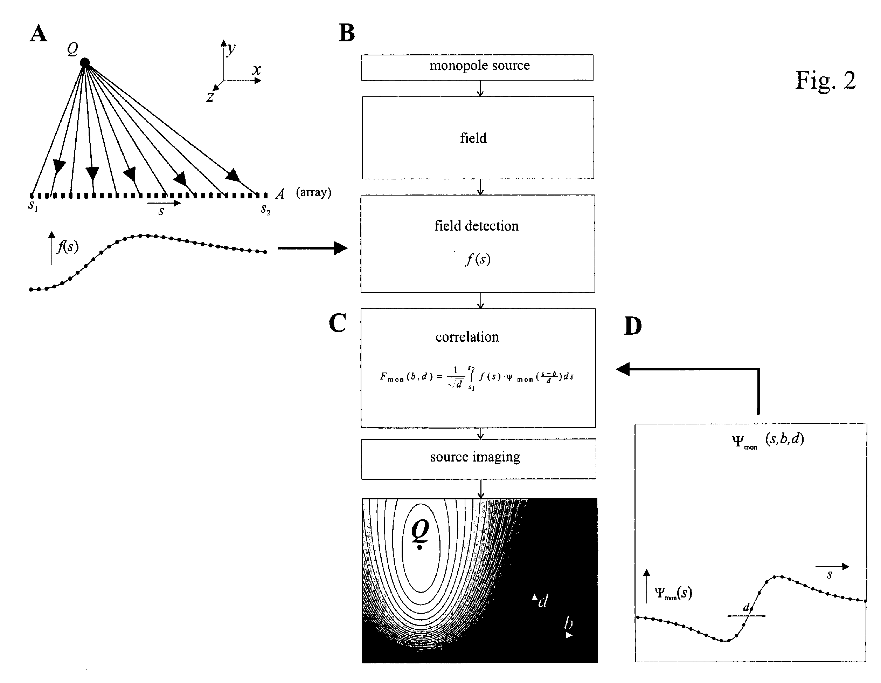

Referring to FIG 2, an example of a method is illustrated for a source which has a monopole moment $Q$. FIG. 2A shows the field lines in 3-D $(x,y,z)$ space of a potential-energy field generated by a source with monopole moment $(Q)$. The figure shows the field lines in the 2-D plane through the source and a sensor array $(A)$. The potential-energy field gradient components along the sensor array $(A)$ are detected and result in an excitation pattern, $f(s)$, which represents the components measured along the direction of the limited array, as a function of the position $(s)$ along the array. The array extends from position along the array $s_1$ to position $s_2$.

FIG. 2B shows a flow diagram representing the steps shown in FIG. 2A.

FIG. 2C shows a flow diagram of image reconstruction algorithms and operations, following the detection steps shown in the flow diagram of B. The results are displayed in 2D $(b,d)$ space (lower box) corresponding with the $(x,y)$ plane in FIG. 2A, representing a plane through the array (A) and the monopole source. Combining suitably arranged arrays in different direction may resolve the sources in 3D space. FIG. 2D shows a monopole template representing an example of the template that can be $b$-shifted and $d$-scaled and used in the reconstruction operation illustrated in FIG. 2C.

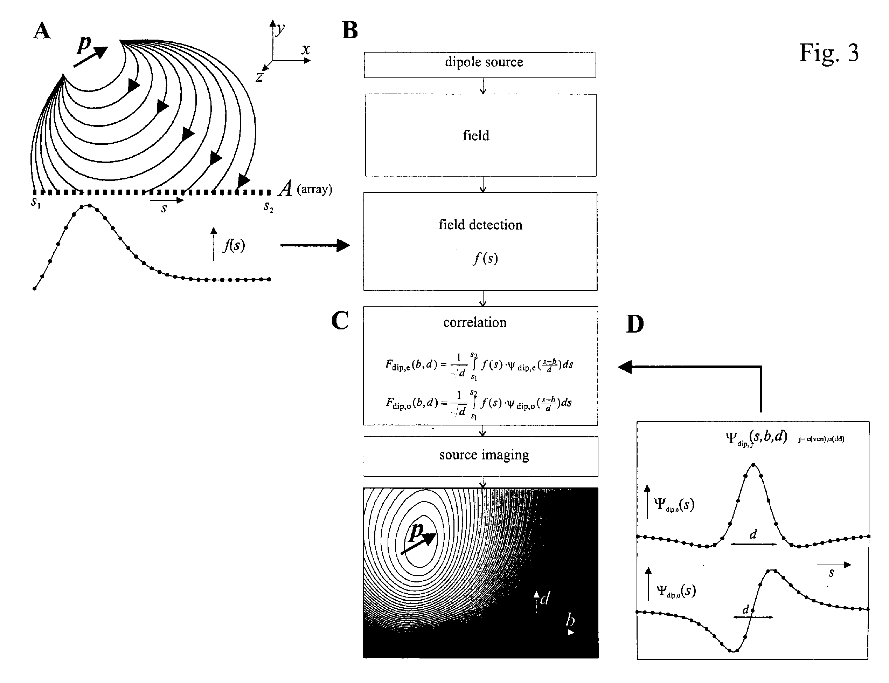

As a second example, a method is described for a source which has a dipole moment. Figure 3 illustrates a method for dipole imaging. Figure 3A shows field lines in 3-D $(x,y,z)$ space of a source with a dipole-moment vector $(\textbf{\textit{p}})$. The figure shows the field lines in the 2-D $(x,y)$ plane through the source and sensor array $(A)$. The dipole vector is assumed to lie in this $(x,y)$ plane, as dipole moment components at right angles to this plane do not induce a field in $(A)$. The field components along the detection array $(A)$ are detected and result in an excitation pattern, $f(s)$, which represents the components of the field measured along the direction of the limited array, as a function of the position $(s)$ along the array. The array extends from $s=s_1$ to $s=s_2$.

Figure 3B shows a flow diagram representing the steps shown in FIG. 3A.

Figure 3C shows a flow diagram of algorithms and image reconstruction operations, following the detection steps shown in the flow diagram of FIG. 3B. The results are displayed in 2D $(b,d)$ space (lower box) corresponding with the $(x,y)$ plane in FIG. 3A, representing a plane through the array $(A)$ and the dipole source. Combining suitably arranged arrays in different direction may resolve the sources in 3D space.

Figure 3D shows a graph of even and odd dipole templates representing examples of the template that can be $b$-shifted and $d$-scaled and used in the reconstruction operation illustrated in FIG. 3C. The templates may for example be determined in accordance with formulas (2) and (3).

The scaled and shifted templates do not form a global orthonormal or orthogonal set of base functions. For example, the templates according to equations (1), (2) or (3) when scaled or shifted do form a set of wavelet functions which are not orthogonal, i.e. which are in a mathematical sense, at least partially dependent on each other. This has the advantage of redundancy in the reconstruction functions that estimate the position of the sources at their local maxima. This, in turn, renders the methods less vulnerable to possible noise contributions to the field components that need to be measured along an array.

The reconstruction functions $F_{\mathrm{dip,e}}$ and $F_{\mathrm{dip,o}}$ (Eq. 4) can be used to detect vibrating or moving objects submerged in a fluid via their near field. The near field pressure gradient, $E_{\mathrm{dip},A}$, along a sensor array $(A)$ of a source consisting of a vibrating object in a fluid can be approximated by

$$E_{\mathrm{dip},A}(s) = -\frac{\varphi_{\mathrm{dip}}(s)}{ds} = \frac{-p}{d^3}\left(\Psi_{\mathrm{dip,e}}(\sigma)\cos\phi + \Psi_{\mathrm{dip,o}}(\sigma)\sin\phi\right) \qquad (16)$$

in which equation $\varphi_{\mathrm{dip}} = \textbf{\textit{p}}\cdot\textbf{\textit{r}}/(r^3)$ represents the near field pressure, and where the dipole moment vector strength $p = |\textbf{\textit{p}}|$ is equal to:

$$p = \frac{-\rho a^3 \omega^2 X_0}{2} \qquad (17)$$

Here, $\rho$ is the fluid's density, $\omega$ is the objects angular vibrating frequency, $\alpha$ is the objects typical dimension (f.i. $\alpha$ is the radius in the case of a spherical object), while $X_0$ is the objects vibrational amplitude.

The function, $f(s)$ may then be used to represented the pressure gradients produced by a vibrating object source along the array and measured by the sensor array $(A)$, so that the dipole reconstruction operations can then be applied on the measured pressure gradients.

It is found that such a near field detection, allows a reliable estimate of parameters of low intensity sources. The near field component of the hydrodynamic pressure of a vibrating object dominates in magnitude the acoustic pressure component, related to compression waves, if the distance to the vibrating source ($d$) is smaller than a fraction of the wavelength $\lambda$ of the wave associated with the vibration ($d < \lambda/(2\pi)$). Therefore, reconstructions employing the near field pressures, or their gradients, of vibrating underwater sources have advantages over detecting the acoustic pressure at the same distance from the source, especially in the case of low intensity sources (i.e. small vibrational amplitude $X_0$, or small object size, $\alpha$).

A practical solution for the detection of pressure gradients along an array is achieved by fluid driven detecting elements that are displaced by the fluid flow past it. The hydrodynamic behaviour of such (half) spherical detecting elements, which may be placed in canals, has been described by Van Netten: " Hydrodynamic detection by cupulae in a lateral line canal: functional relations between physics and physiology ", published in Biol Cybern, 2006 94, 67-85, incorporated herein by reference. Such detecting elements, when placed in a canal have been found to be sensitive to pressure gradients. It can be shown that these elements are displaced with amplitudes, $Y$, as a function of position, $s$, along an array so that the pressure gradient profile, $f(s)$ required for reconstruction of the sources, can be obtained via $f(s) = CY(s)$, where $C$ depends on known physical and hydrodynamic properties of the fluid, the detecting elements, and if applicable, the canals in which they may be embedded. Hence, by measuring the displacement of the detecting elements, properties of a source can be determined in a manner as described above.

Below, desired properties of a particular type of fluid pressure gradient sensor are described, which allow designing a practical implementation of the fluid pressure gradient sensor taking into account required frequency characteristics and sensitivities in combination with desired physical properties.

Rigid objects, when submerged in a fluid and elastically coupled to a supporting structure, may act as effective sensors of fluid flow. Such objects sense the forces produced by the fluid flow past them, which effectively induce a displacement from the object's equilibrium position. This displacement ($X$) can be used as a measure of fluid velocity. The detection characteristics, i.e. the frequency selectivity and sensitivity of these types of fluid sensors are, apart from the fluid density ($\rho$) and the fluid viscosity ($\mu$), governed by their physical characteristic size ($\alpha$), such as f.i. their radius and the stiffness ($K$), of their elastic coupling to the supporting structure. As an example, the equations given below are theoretical results derived for spherically shaped detection elements. Differently shaped elements qualitatively operate according to the same scheme, but details of their detection characteristics may differ.

In case the detecting element has the shape of a sphere its sensitivity, Sv, to a constant velocity defined as the displacement ($X$) of the element per velocity of the fluid ($V$), is proportional to the element's radius ($\alpha$) and fluid viscosity ($\mu$) and inversely proportional to the stiffness $K$ of the connection between the sphere and the supporting structure, and may be described mathematically as:

$$S_V = X/V = 6\pi a \mu / K \qquad\qquad (18)$$

A similar sensitivity may be reached if the flow velocity is not constant but changing slowly. However, this sensitivity is not maintained if the fluid velocity is rapidly changing. A cut-off frequency of vibratory fluid flow may therefore be defined beyond which the sensitivity declines. A suitable value for the angular cut-off frequency, $\omega_c$, has been found to be substantially the inverse of the sensitivity at low-frequencies, e.g. defined mathematically $\omega_c = 1/S_V$ . When the combination of physical parameters of the detecting elements, given by the mathematical relationship $K a \rho/(6\pi\mu^2) = N_r$ is substantially smaller than 1, the detecting elements have been found to possess characteristics similar to that of an ideal low-pass filter, i.e. an almost constant displacement response $X$ as a function of vibration frequency $\omega$ of the fluid velocity in a low-pass frequency range from 0 (static flow) up to the cut-off frequency $\omega_c$.

In the frequency range of 0 to $\omega_c$, for a spherical sensor this corresponds to a sensitivity $S_{\Delta p} = X/G$ to local pressure gradients $G$, with: $S_{\Delta p} = -S_V/(i\omega\rho)$. This pressure-gradient sensitivity is thus inversely proportional to the angular frequency of fluid vibration, $\omega$.

A more constant pressure-gradient sensitivity may be obtained if the flow-sensing elements are embedded in rigid canals or pipe-like structures that have openings so that the fluid flow outside the canal structure drives the fluid flow inside it. Attaching the sensor elements via elastic couplings to such canals may make the elements' displacements effectively independent of the vibrational frequency of fluid pressure gradients up to the sensing element's resonance frequency

$$(\omega_r \cong \sqrt{K/(2\pi a^3)}\,),$$

if the combination of its physical parameters given by $Ka\rho/(6\pi\mu^2) = N_r$ is substantially larger than 1. When the sensing element is located in the centre of a circular canal with radius $R$, filling up a significant fraction of the canal's cross-sectional area, it has been found that the overall pressure gradient sensitivity of the combination, $S_{\Delta p,\mathrm{can}} = X/G$, can be approximated by: $S_{\Delta p,\mathrm{can}} = -6\pi aR^2/(5K)$.

It is found that a suitable spacing between the hydrodynamic detecting elements may to be approximately equal to, or smaller than, half the distance between the array ($A$) and the closest objects that need to be detected.

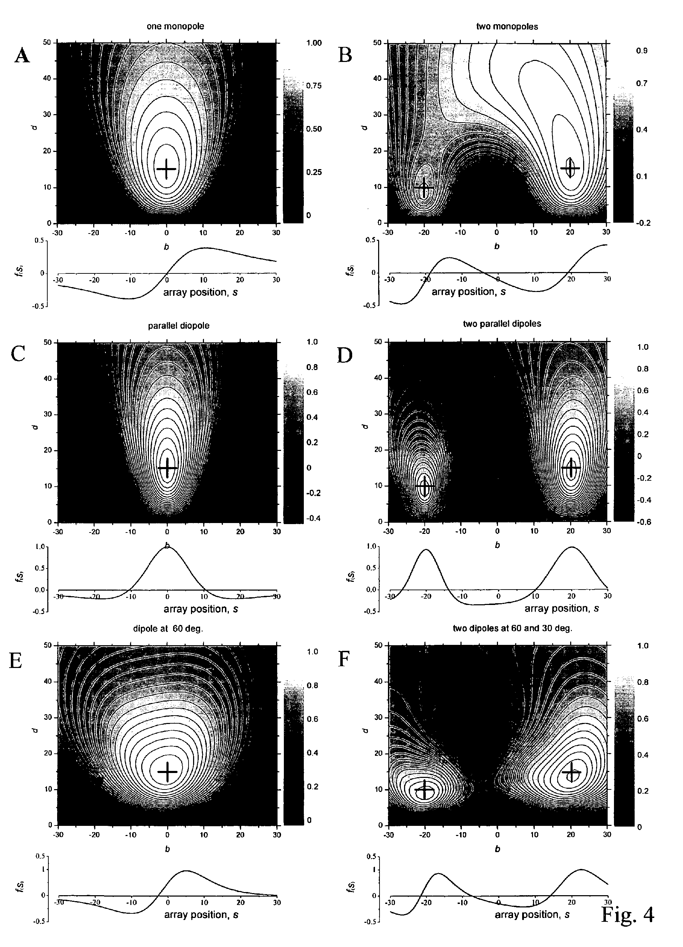

Figure 4 shows results of the reconstruction methods, obtained by using a method according to the invention. For the shown results, all strengths (mono- as well as dipole moment) were normalized to 1.

The procedure to determine the results was as follows: in the cases of a single mono or dipole source, which was supposed to be located on a fixed position (0,15), their respective mono (4A) or dipole (4C,4E) fields along the array, i.e. the excitation patterns $f(s)$, were determined. These excitation patterns are indicated below each contour map. In the case of two sources, which were located on positions (-20,10) and (20,15), the excitation patterns for two mono- (4B) and two dipole (4D,4F) sources were determined as a superposition of the two individual sources. The excitation patterns were determined on the interval $s_1 = -100 \leq s \leq 100 = s_2$. For $s$-values outside this interval the excitation pattern measured by the sensor array, $f(s)$, was thus effectively taken equal to zero. Then the reconstruction operations indicated in Eq. 4 were numerically applied on $f(s)$ on a unitary spatial grid while the results, $F_{i,j}(b,d)$, were plotted as contour maps in the 2-D ($b,d$) region: $-30 \leq b \leq 30$; $0 \leq d \leq 50$ . The position of the array corresponds with $d = 0$, while the centre of the array coincides with $b = 0$. The real positions of the sources, (i.e. their $b,d$ values), used to determine $f(s)$, are indicated with the crosses in the contour maps. Spatial units are arbitrary.

Referring to Figure 4, FIG. 4A shows a graph of the reconstruction function of a monopole source, located at ($b,d$) = (0,15). For the reconstruction $F_{\mathrm{mon}}$ was used. FIG. 4C shows a graph of the reconstruction function of a dipole source, located at ($b,d$) = (0,15). The direction of the dipole source is parallel to the array. For the reconstruction $F_{\mathrm{di,e}}$ was used. FIG. 4B shows a graph of the reconstruction function of two monopole sources which are located at ($b,d$)= (-20,10) and (20,15). For the reconstruction $F_{\mathrm{mon}}$ was used. FIG. 4D shows a graph of the reconstruction function of two dipole sources located at ($b,d$) = (-20,10 and (20,15). The directions of the dipoles sources are parallel to the array. For the reconstruction $F_{\mathrm{di,e}}$ was used. FIG. 4E shows a graph of the reconstruction function of a single dipole source directed at $\phi$=60° and located at ($b,d$) = (0,10). For the reconstruction $F_{\mathrm{com}}$ was used. FIG. 4F shows a graph of the reconstruction function of two dipole sources located at ($b,d$) = (-20,10 and (20,15) and directed at $\phi = 60°$ and at $\phi = 30°$ respectively. For the reconstruction $F_{\mathrm{com}}$ was used.

Figure 4A shows that the position of the single monopole is exactly reconstructed by the maximum of the reconstruction function $F_{\mathrm{mon}}$. The strength of the monopole is estimated as 0.994.

In the case of the two monopoles two local maxima are found that are close to (-20, 9), and exactly (20,15) at the real position (FIG. 4B). Their strengths are reconstructed as 0.808 and 0.863 respectively.

The single dipole source ($\phi = 0°$), of which the position is exactly reconstructed at (0,15), using $F_{\mathrm{dip,e}}$ (FIG. 4C) has a reconstructed strength of 1.000.

The two reconstructed dipole source positions ($\phi = 0°$), are close (-20,9), (20,14) to the real source positions (FIG. 4D) and their strengths are reconstructed as 0.964 and 0.975 respectively.

In Figure 4E a single dipole source at (0,15) is reconstructed from an excitation profile determined for a dipole moment vector directed at $\phi = 60°$ with respect to the array. Its reconstructed position coincides exactly with the maximum of $F_{\mathrm{com}}$ , and the reconstructed magnitude is equal to 1.000, while its direction was reconstructed at 60.004°.

In Fig 4F the results of a reconstruction is shown of two dipoles. One at position (-20,10) and angle $\phi = 60°$, the other at position (20,15) and angle $\phi = 30°$. The reconstruction yields for the two source positions, magnitudes and angles respectively (-20,9), 0.923 and $\phi = 57.03°$ and (21,14), 1.008 and $\phi = 29.99°$.

The invention may also be implemented in a computer program for running on a computer system, at least including code portions for performing steps of a method according to the invention when run on a programmable apparatus, such as a computer system or enabling a programmable apparatus to perform functions of a device or system according to the invention. Such a computer program may be provided on a data carrier, such as a CD-rom or diskette, stored with data loadable in a memory of a computer system, the data representing the computer program. The data carrier may further be a data connection, such as a telephone cable or a wireless connection

The invention is not limited to implementation in the disclosed examples of devices, but can also be applied in other devices. In particular, the invention is not limited to physical devices or units implemented in non-programmable hardware but can also be applied in programmable devices or units able to perform the desired device functions by operating in accordance with suitable program code. Furthermore, the devices may be physically distributed over a number of apparatuses, while logically regarded as a single device. For example, the signal processor may be implemented as a number of suitably connected integrated circuits arranged to perform the functions of the signal processor

Also, devices logically regarded as separate devices may be integrated in a single physical device. For example, in the example of Fig. 1, the signal processor 3, the correlator 4 and the calculator 5 may be implemented in a single integrated circuit.

In the foregoing specification, the invention has been described with reference to specific examples of embodiments of the invention. It will, however, be evident that various modifications and changes may be made therein without departing from the broader spirit and scope of the invention as set forth in the appended claims. For example, the system may include two or more sensor arrays oriented at different angles with respect to each other to determine aspects of the source in 3-dimensions. However, the sensors may be arranged in any other suitable manner and for example the array or a substantial part of the sensors in the array may be provided in a planar arrangement or an arrangement curved in one or two directions.

Also, the sensor system may be used in any suitable type of application. The sensor system may for example be used to detect the presence of an object in a fluid, e.g. water. Such an application may for example be used to detect the presence of a vessel, such as a small rubber boat or a torpedo, in the vicinity of a ship or submarine, and optionally to determine parameters of the vessel such as speed, distance and size. Thereby, a vessel can be detected, even when e.g. below the radar.

In a further embodiment, the source may be a brain or other electrical physiological activity in a living being. The sensor array may then be placed near the head of a human being or another type of animal or other parts of the body, and the sensors may for example be skin electrodes or other suitable types of sensors. Thereby, the electrical activity of parts of the brain or other electrical physiological activity can be visualized and e.g. brain function or dysfunctions be detected.

Also, the sensor system may be provided at the front, and/or back and/or sides of the vehicle. The sensor system may for example be implemented in a car, for example to detect moving objects in front of the car or at the back, and be combined with a cruise control to automatically adjust the speed of the vehicle depending on the objects detected and their speed relative to the vehicle. Also, the sensor system may be implemented in a car to detect objects during parking of the car.

However, other modifications, variations and alternatives are also possible. For example, the source and the sensor array may be spaced and a medium, such as a fluid, may be present in the space between the source and the sensor array. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage.

## Claims

1.    A sensor system for determining one or more parameters of a source of a potential-energy field, including:

a sensor array for sensing a property of the potential-energy field generated by said source, said sensor array including:

■ at least one first sensor at a first position, and
■ at least one second sensor at a second position different from said first position, said at least one first sensor and said at least one second sensor each having a sensor output for outputting a sensor signal representing said sensed property;

a signal processor for determining the sensed property as a function of the position of said at least one first sensor and said at least one second sensor, said signal processing including:

■ a processor input connected to the sensor outputs of said at least one first sensor and said at least one second sensor, for receiving said sensor signals,
■ a processor output for outputting a signal representing a determined result;

a correlator arranged to correlate said determined result to a predetermined result derived for a template source positioned at a predetermined position and/or orientation with respect to said sensor array, said correlator including:

■ a first correlator input connected to said processor output, and
■ a second correlator input connected to a memory, in which memory data is stored representing said predetermined result

■ a correlator output for outputting a correlation result;

said system further including a calculator for determining said parameter from the correlation result, said calculator including:

■ a calculator input connected to said correlator output for receiving said correlation result, and, optionally, a calculator output for outputting said determined parameter.

2. A sensor system according to claim 1, wherein said signal processor is arranged to compare the sensed property of said at least one first processor with the sensed property of the at least one second processor.

3. A sensor system according to claim 2, wherein said signal processor is arranged to determine a component of said potential-energy field parallel to the sensor array.

4. A sensor system according to claim 3 wherein said processor is arranged to determine a field gradient, such as a field pressure gradient.

5. A sensor system according to any one of the preceding claims, wherein said source is one or more of: a monopole, a dipole, vibrating, constant, (electro)magnetic, electric, acoustic, and/or hydrodynamic.

6. A sensor system according to any one of the preceding claims, wherein said source is part of a human brain or another electric and/or magnetic active part of a living animal.

7. A sensor system according to any one of the preceding claims, wherein said parameter includes one or more of: position, amplitude, orientation, direction of motion.

8. A sensor system according to any one of the preceding claims, wherein said source is an extended source and wherein said template source is a monopole or a dipole.

9. A sensor system according to any one of the preceding claims, wherein said memory includes data representing a predetermined result for different orientations of said template source with respect to the sensor array.

10. A sensor system according to any one of the preceding claims, wherein the distance between said source and said array is of the order of or smaller than the dimensions of the sensor array.

11. A sensor system according to any one of the preceding claims, including at least two sensor arrays oriented at different angle with respect to each other.

12. A sensor system according to any one of the preceding claims, wherein said array is substantially one of: a planar array, an array curved in one direction, an array curved in two directions.

13. A sensor system according to any one of the preceding claims, wherein said predetermined result represents a monopole or dipole template.

14. A sensor system according to claim 13, wherein said correlator is arranged to determined a distance scaled correlation or convolution of said scaled and shifted template and said measured result.

15. A sensor system according to claim 14, wherein said calculator is arranged to determine a position of a maximum in a result of said correlation or convolution and optionally to determine a source magnitude from said determined position.

16. A sensor system according to any one of the preceding claims, wherein said correlator is arranged to reconstruct, from said determined result and said predetermined result, a field image of said potential-energy field in a plane, said plane being defined by said sensor array and a position of said source relative to the sensor array.

17. A sensor system according to claim 9 and 16, wherein said correlator is arranged to reconstruct a first image of said potential-energy field using a first predetermined result of a first predetermined orientation said template source and a second image of said potential-energy field using a second predetermined result of a second predetermined orientation of said template source, and optionally combining said first image and said second image into said field image.

18. A sensor system according to claim 16 or 17, wherein said calculator is arranged to determine a location of, optionally local, maximum in said field image, and, optionally, to determine a location of said source to be at said location of maximum and, optionally, to determine an orientation of the source.

19. Use of a sensor system according to any one of the preceding claims, for medical imaging.

20. A method for determining one or more parameters of a source of an potential-energy field, including:

sensing a property of the potential-energy field generated by said source;
determining a determined result by determining the sensed property as a function of place;
correlating said determined result to a predetermined result derived for a template source positioned at a predetermined position, optionally with predetermined strength and/or orientation, and
determining said parameter from a correlation result.

21. A computer program product including program code portions for performing a method as claimed in claim 19 when run on a programmable apparatus.

Fig. 1

Fig. 2

**A**

$Q$

$y$ $x$ $z$

$A$ (array)

$s_1$ $s$ $s_2$

$f(s)$

**B**

monopole source

field

field detection

$f(s)$

**C**

correlation

$$F_{mon}(b,d) = \frac{1}{\sqrt{d}} \int_{s_1}^{s_2} f(s) \cdot \Psi_{mon}(\frac{s-b}{d}) ds$$

source imaging

$Q$

$d$ $b$

**D**

$\Psi_{mon}(s,b,d)$

$\Psi_{mon}(s)$ $d$ $s$

EP 1 818 651 A1

Fig. 3

**A**

$p$

$y$  $x$  $z$

$A$ (array)

$s_1$  $s$  $s_2$

$f(s)$

$f(s)$

**B**

dipole source

field

field detection

$f(s)$

correlation

$$F_{dip,e}(b,d) = \frac{1}{\sqrt{d}} \int_{s_1}^{s_2} f(s) \cdot \psi_{dip,e}\left(\frac{s-b}{d}\right) ds$$

$$F_{dip,o}(b,d) = \frac{1}{\sqrt{d}} \int_{s_1}^{s_2} f(s) \cdot \psi_{dip,o}\left(\frac{s-b}{d}\right) ds$$

source imaging

**C**

$p$

$d$

$b$

**D**

$\Psi_{dip,j}(s,b,d)$   $j=e(ven),o(dd)$

$\Psi_{dip,e}(s)$

$d$

$s$

$\Psi_{dip,o}(s)$

$d$

EP 1 818 651 A1

Fig. 4

**European Patent Office**

**EUROPEAN SEARCH REPORT**

Application Number

EP 06 07 5323

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/047823 A (BAE SYSTEMS PLC; ALEXANDER, RICHARD, JOHN, RENNIE; MANLEY, RICHARD, WI) 26 May 2005 (2005-05-26) * the whole document * | 1,5,7, 10,11, 13,19-21 | INV. G01D5/14 G01D5/16 |
| A | | 3,4,9, 12,14 | |

-----

TECHNICAL FIELDS SEARCHED (IPC)

G01D

The present search report has been drawn up for all claims

| Place of search | Date of completion of the search | Examiner |
|---|---|---|
| The Hague | 13 June 2006 | Chapple, I |

EPO FORM 1503 03.82 (P04C01)

## ANNEX TO THE EUROPEAN SEARCH REPORT
## ON EUROPEAN PATENT APPLICATION NO.

EP 06 07 5323

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2006

| Patent document cited in search report | Publication date | Patent family member(s) | Publication date |
|---|---|---|---|
| WO 2005047823 A | 26-05-2005 | US 2006041398 A1 | 23-02-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FRANOSCH et al.** Estimating position and velocity of a submerged moving object by the clawed frog Xenopus and by fish-A cybernetic approach. *Biol Cybern,* 2005, vol. 93, 231-238

- **VAN NETTEN.** Hydrodynamic detection by cupulae in a lateral line canal: functional relations between physics and physiology. *Biol Cybern,* 2006, vol. 94, 67-85